**Europäisches Patentamt**

**European Patent Office**

**Office européen des brevets**

(19)

(11) Veröffentlichungsnummer : **0 402 695 B1**

(12) **EUROPÄISCHE PATENTSCHRIFT**

(45) Veröffentlichungstag der Patentschrift :
**03.11.93 Patentblatt 93/44**

(21) Anmeldenummer : **90110179.0**

(22) Anmeldetag : **29.05.90**

(51) Int. Cl.⁵ : **B27K 3/50**

(54) **Mischung für den Holzschutz.**

(30) Priorität : **10.06.89 DE 3918976**

(43) Veröffentlichungstag der Anmeldung :
**19.12.90 Patentblatt 90/51**

(45) Bekanntmachung des Hinweises auf die
Patenterteilung :
**03.11.93 Patentblatt 93/44**

(84) Benannte Vertragsstaaten :
**AT BE CH DE DK ES FR GB GR IT LI NL SE**

(56) Entgegenhaltungen :
**EP-A- 0 135 112**
**EP-A- 0 223 095**
**DE-C- 2 410 603**

(73) Patentinhaber : **Dr. Wolman GmbH**
**Dr.-Wolman-Strasse 31-33**
**D-76547 Sinzheim (DE)**

(72) Erfinder : **Reuther, Wolfgang, Dr.**
**Am Pferchelhang 16**
**D-6900 Heidelberg (DE)**
Erfinder : **Borck, Hans-Volker**
**Im Kastanienwald 8**
**D-7570 Baden-Baden (DE)**
Erfinder : **Goettsche, Reimer, Dr.**
**Waldstrasse 27**
**D-7570 Baden-Baden 19 (DE)**

(74) Vertreter : **Schweiss, Werner, Dr. et al**
**BASF Aktiengesellschaft, Patentabteilung**
**ZDX - C 6**
**D-67056 Ludwigshafen (DE)**

## Beschreibung

Es ist bekannt, zum Schutz von Holz oder Holzwerkstoffen gegen holzzerstörende Basidiomyceten Salze des N-(Cyclohexyldiazeniumdioxy)-Anions einzusetzen (DE-10 24 743). Die Wirksamkeit insbesondere gegenüber Weißfäuleerreger wie z.B. Coriolus versicolor ist jedoch nicht ausreichend; zum Schutz gegen diesen Pilz sind hohe Anwendungskonzentration des Fungizids in Holzschutzformulierungen notwendig.

Die fungizide Wirksamkeit von 4-[3-[4-(1,1-Dimethylethyl)phenyl]-2-methyl]-propyl-2,6-(cis)-dimethylmorpholin (Fenpropimorph) ist bekannt (DE-26 56 747).

Es ist ferner bekannt, wäßrigen Lösungen von Holzschutzmitteln oder von Fenpropimorph oder von bestimmten Salzen von Fenpropimorph andere Wirkstoffe, z.B. Salze des N-(Cyclohexyldiazeniumdioxy)-Anions (HDO) oder Fenpropimorph hinzuzufügen (EP 135 112, EP 223 095, DE 3 736 298). Es ist ferner bekannt, Fenpropimorph mit wasserlöslichen Salzen (Alkalisalzen) von HDO zu mischen (EP 370 371). Von allen diesen Mischungen sind synergistische Wirkungen nicht bekannt.

Es wurde gefunden, daß eine synergistische Mischung aus b) einem Metallsalz des N-(Cyclohexyldiazeniumdioxy)-Anions, außer einem Alkalisalz, insbesondere Tris-N-(Cyclohexyldiazenium-dioxy)-Aluminium, und a) Fenpropimorph eine über die Wirksamkeit der Einzelwirkstoffe hinausgehende fungizide Wirksamkeit aufweist, d.h. es liegt ein Synergismus vor.

Das Mischungsverhältnis der Wirkstoffe kann in einem weiten Bereich schwanken, es empfiehlt sich z.B. ein Mischungsverhältnis (Gewichtsverhältnis) von a zu b wie 1:10 bis 10:1, insbesondere 5:1 bis 1:5, bevorzugt 2:1 bis 1:1.

Die neue Wirkstoffmischung kann in Form üblicher Holzschutzformulierungen wie Lösungen, Emulsionen, Emulsionskonzentraten, Pasten eingesetzt werden. Für den Einsatz in Holzwerkstoffen empfehlen sich möglichst hochkonzentrierte Zubereitung der Wirkstoffgemische, um möglichst wenig Wasser in den Holzwerkstoff einzubringen.

Die Formulierungen und Zubereitung für den Holzschutz enthalten z.B. zwischen 0,1 % und 90 % (Gew.-%) des Wirkstoffgemisches.

Die Anwendung erfolgt z.B. in öliger Form (lösemittelhaltig ohne und mit Bindemittel) oder lösungsmittelfrei in wässriger Form (Emulsionskonzentrate).

Die Anwendungsmengen der gebrauchsfertigen Lösungen oder Emulsionen betragen z.B. bei Gehalten an Wirkstoffmischungen von z.B. 0,5 bis 5,0 % zwischen 80 bis 350 g/m$^2$ Holzoberfläche bei Streichen, Spritzen (Sprühen), Tauchen und Fluten je nach Gefährdungsgrad durch Pilzinfektion und Anwendungsbereich bzw. -verfahren.

Ein besonders effektiver Holzschutz wird durch bekannte großtechnische Imprägnierverfahren, z.B. Vakuum-, Doppelvakuum- oder Druckverfahren, erzielt. Die Konzentrationen der Wirkstoffgemische in den Anwendungslösungen oder -emulsionen werden hierbei so eingestellt, daß z.B. etwa 0,1 bis 5 kg/m$^3$ an Wirkstoffgemisch in den imprägnierbaren Holzanteil eingebracht werden.

Bei Holzwerkstoffen z.B. Span-, Faser- und Sperrholzplatten wird eine konzentrierte Wirkstoffmischung z.B. durch Mischung mit dem Leim, durch direktes Besprühen der Späne oder Furniere verwendet; die Anwendungsmengen liegen hierbei für die Mischung z.B. in der Größenordnung von 1 bis 6 kg/m$^3$ trockenes Holz.

Neben dem Tris-N-(Cyclohexyldiazeniumdioxy)-Aluminium können auch andere Metallsalze oder Mischungen von Metallsalzen eingesetzt werden, z.B.

Bis-N-(Cyclohexyldiazeniumdioxy)-Calcium

Bis-N-(Cyclohexyldiazeniumdioxy)-Magnesium

Bis-N-(Cyclohexyldiazeniumdioxy)-Zink

Bis-N-(Cyclohexyldiazeniumdioxy)-Kupfer

Tris-N-(Cyclohexyldiazeniumdioxy)-Eisen

Zur Vergrößerung des Wirkstoffspektrums oder zur Erzielung besonderer Effekte können der Wirkstoffmischung weitere bekannte Fungizide oder Insektizide oder andere Wirkstoffe zugesetzt werden. Besonders günstige Mischungspartner sind z.B. die folgenden Verbindungen:

N-Tridecyl-2,6-dimethylmorpholin

Organozinnverbindungen, wie Tributylzinnoxid und Tributylzinnbenzoat

N-(Cyclohexyldiazeniumdioxy)-Tributylzinn

Methylenbisthioczanat

Dimethylalkylamine

Dialkylmethylamine

Trialkylamine

Chlorierte Phenole, wie Tetra- und Pentachlorphenol

Tetrachlorisophthalsäure-dinitril

N-Cyclohexyl-N-methoxy-2,5-dimethyl-furan-3-carbonsäureamid

N-Dimethyl-N'-phenyl-(N-fluarmethylthio)-sulfamid
N,N-Dimethyl-N'-toluyl-(N-fluormethylthio)-sulfamid
Benzimidazol-2-carbaminsäure-methylester
2-Thiocyanomethyl-thiobenzothiazol
Kupfernaphthenat
Kupfer-8-hydoxychinolin
2-Jodbenzoesäureanilid
1-(1',2',4'-Triazolyl-1')-(1-(4'-chlorphenoxy))-3,3-dimethylbutan-2-on   1-(1',2',4'-Triazolyl-1')-(1-(4'-chlorphenoxy))-3,3-dimethylbutan-2-ol Hexachlorcyclohexan
0,0-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
2-N-Octyl-4-Isothiazolin-3-on und substituierte Verbindungen
3-Jodo-2-propinylbutylcarbamat
1,2-Benzisothiazolin-3-on
1-(4-Chlorphenoxy)3,3-dimethyl-1-(1H-1,2,4-triazol-1-yl)-butan-2-on
1-(4-Chlorphenoxy)3,3-dimethyl-1-(1H-1,2,3-triazol-2-yl)-butan-2-ol
0,0-Dimethyl-S-(2-methylamino-2-oxoethyl)-dithiophosphat
0,0-Diethyl-0-(3,5,6-trichlor-2-pyridyl)-thiosphospat
0,0-Dimethyl-S-(N-phthalimido)-methyldithiophosphat
0,0-Diethyl-0.($\alpha$-cyanbenzyliden-amino)-thiophosphat
6,7,8,9,10-Hexachlor-1,5,5a,6,9,9a-hexahydro-6,9-methano-2,3,4-benozoedioxothiepien-3-oxid
2-sek.-Butyl-phenyl-N-methylcarbamat
2-i-Propoxyphenyl-N-methyl-carbamat
N-methyl-1-naphthyl-carbamat
Norbornen-dimethanohexa-chlorcyclosulfit
1-(4-Chlorphenyl)-3-(2,6-di-fluorbenzoyl)-harnstoff
Quatäre Ammonium- und/oder Phosphoniumverbindungen
Synthetische Pyrethroide, wie
(+)-3-(2,2-Dichlorvinyl-2,2-dimethyl)-cyclopropan-1-carbonsäure-3-phenoxybenzylester
3-(2,2-Dichlorvinyl-2,2-dimethyl)-cyclopropan-1-carbonsäure-$\alpha$-Cyano-3,3-phenoxybenzylester
3-(2,2-Dibromvinyl-2-2-dimethyl)-$\alpha$-cyano-m-phenoxybenzyl-1R,3R)-cyclopropan-carboxylat
$\alpha$-Cyano-3-phenoxybenzyl-isopropyl-2,4-chlorphenylacetat

Den Holzschutzmitteln können Bindemittel, z.B. öllösliche oder wasserverdünnbare Alkydharze, z.B. bei Grundierungen (ca. 3 bis 10 % Festharz), z.B. bei Lasuren (ca. 10 bis 25 % Festharz), anorganische oder organische Pigmentzubereitungen, wasser- und öllösliche Farbstoffe, "waterrepellents" wie Metallstearate oder Wachse bzw. Hilfsmittel, wie z.B. Trockner zugesetzt werden.

Die Erfindung wird an folgenden Beispielen erläutert:

Grenzwertbestimmung der Wirkung gegen holzzerstörende Pilze.

Das Verfahren dient zur Bestimung der vorbeugenden Wirkung von Holzschutzmitteln gegen holzzerstörende Pilze.

Gleichartige, bei 103°C bis zur Gewichtskonstanz getrocknete Holzklötzchen (5 x 2,5 x 1,5 cm) werden mit abgestuften Mengen des zu prüfenden Holzschutzmittels vollgetränkt, getrocknet, ein Teil der Klötzchen mit Wasser ausgewaschen (Auswaschung der Wirkstoffmischung aus dem Holz) und in Glasschalen dem Angriff von Kulturen holzzerstörender Pilze ausgesetzt. Als Nährboden für die Pilze dient Malzagar (enthaltend 4 % Malzextrakt). Die durch den Pilzbefall bewirkte Zerstörung des Holzes wird durch den Gewichtsverlust der Probehölzer erfaßt; ein Gewichtsverlust von 2 % und mehr wird als Holzzerstörung gewertet.

Angegeben wird eine untere Wirkstoffkonzentration, bei der das Holz gerade beginnt zerstört zu werden, und eine obere Wirkstoffkonzentration, bei der keine Holzzerstörung zu erkennen ist, somit ein vollständiger Holzschutz erreicht ist. Für die Bewertung eines Holzschutzmittels in der Praxis ist immer von der oberen Wirkstoffkonzentration auszugehen.

Grenzwertbestimmung der Wirkung gegen holzzerstörende Pilze (in Kg Wirkstoffmischung je m$^3$ Holz).

Wirkstoffe:

A: Fenpropimorph

B: Tris-N-(Cyclohexyldiazeniumdioxy)-Aluminium

Beispiel 1

ohne Auswaschung

| Wirkstoff | Coniophora puteana | Poria monticola | Coriolus versicolor |
|---|---|---|---|
| A | 1,1 bis 2,1 | 0,7 bis 1,1 | 0,2 bis 0,3 |
| B | 0,3 bis 0,5 | 0,2 bis 0,3 | 3,8 bis 6,0 |
| Wirkstoff-Mischung | | | |
| A:B = 2:1 | 0,2 bis 0,4 | weniger als 0,2 | weniger als 0,2 |

Das Ergebnis des Versuchs zeigt, daß eine 2:1 (Gewichtsverhältnis) Mischung der Wirkstoffe A und B gegenüber den Einzelwirkstoffen eine deutlich bessere Wirksamkeit besitzt.

Beispiel 2

mit Auswaschung

| Wirkstoff | Coniophora puteana | Poria monticola | Coriolus versicolor |
|---|---|---|---|
| A | 2,0 bis 4,1 | 0,7 bis 1,1 | 0,2 bis 0,3 |
| B | 0,4 bis 0,8 | 0,3 bis 0,5 | mehr als 6,8 |
| Wirkstoff-Mischung | | | |
| A:B = 2:1 | 0,3 bis 0,5 | 0,2 bis 0,4 | 0,2 bis 0,3 |

Das Ergebnis des Versuchs zeigt, daß eine 2:1 (Gewichtsverhältnis) Mischung der Wirkstoffe A und B gegenüber den Einzelwirkstoffen eine deutlich bessere Wirksamkeit besitzt.

Beispiel 3

ohne Auswaschung

4

| Wirkstoff | Coniophora puteana | Poria monticola | Coriolus versicolor |
|---|---|---|---|
| A | 1,1 bis 2,1 | 0,7 bis 1,1 | 0,2 bis 0,3 |
| B | 0,3 bis 0,5 | 0,2 bis 0,3 | 3,8 bis 6,0 |
| Wirkstoff-Mischung | | | |
| A:B = 1:1 | weniger als 0,2 | weniger als 0,2 | weniger als 0,2 |

Das Ergebnis des Versuchs zeigt, daß eine 1:1 (Gewichtsverhältnis) Mischung der Wirkstoffe A und B gegenüber den Einzelwirkstoffen eine deutlich bessere Wirksamkeit besitzt.

Beispiel 4

mit Auswaschung

| Wirkstoff | Coniophora puteana | Poria monticola | Coriolus versicolor |
|---|---|---|---|
| A | 2,0 bis 4,1 | 0,7 bis 1,1 | 0,2 bis 0,3 |
| B | 0,4 bis 0,8 | 0,3 bis 0,5 | mehr als 6,8 |
| Wirkstoff-Mischung | | | |
| A:B = 1:1 | 0,2 bis 0,5 | 0,2 bis 0,4 | 0,2 bis 0,3 |

Das Ergebnis des Versuchs zeigt, daß eine 1:1 (Gewichtsverhältnis) Mischung der Wirkstoffe A und B gegenüber den Einzelwirkstoffen eine deutlich bessere Wirksamkeit besitzt.

**Patentansprüche**

1. Mischung für den Holzschutz, enthaltend
   a) 4-[3-(4-tert.-butylphenyl)-2-methyl-propyl]-2,6-cis-dimethylmorpholin und
   b) ein Metallsalz des N-(Cyclohexyldiazeniumdioxy)-Anions, außer einem Alkalisalz, in einer solchen Menge, daß die Mischung eine synergistische Wirkung aufweist.

2. Mischung gemäß Anspruch 1, enthaltend als Wirkstoff b das Aluminiumsalz des N-(Cyclohexyldiazeniumdioxy)-Anions.

**3.** Mischung gemäß Anspruch 1, enthaltend die Wirkstoffe a und b im Gewichtsverhältnis 1:1 bis 2:1.

**4.** Verfahren zum Schutz von Holz, dadurch gekennzeichnet, daß man das Holz mit einer fungizid wirksamen Menge einer synergistischen Mischung gemäß Anspruch 1 behandelt.

**Claims**

**1.** A mixture for the preservation of wood, comprising
a) 4-[3-(4-tert-butylphenyl)-2-methylpropyl]-2,6-cis-dimethylmorpholine and
b) a metal salt of the N-(cyclohexyldiazeniumdioxy) anion, with the exception of an alkali metal salt, in an amount such that the mixture has a synergistic effect.

**2.** A mixture as claimed in claim 1, comprising, as active ingredient b, the aluminum salt of the N-(cyclohexyldiazeniumdioxy) anion.

**3.** A mixture as claimed in claim 1, comprising the active ingredients a and b in a weight ratio of 1 : 1 to 2 : 1.

**4.** A process for the preservation of wood, which comprises treating the wood with a fungicidally effective amount of a synergistic mixture as claimed in claim 1.

**Revendications**

**1.** Mélange pour la protection du bois, contenant
a) de la 4-[3-(4-ter-butylphnéyl)-2-méthyl-propyl]-2,6-cis-diméthylmorpholine et
b) outre un sel alcalin, un sel métallique de l'anion N-(cyclohexyldiazéniumdioxy), en quantité telle que le mélange présente un effet synergique.

**2.** Mélange selon la revendication 1, contenant, comme principe actif b, le sel d'aluminium de l'anion N-(cyclohexyldiazéniumdioxy).

**3.** Procédé pour la protection du bois, caractérisé par le fait que l'on traite le bois avec une quantité efficace au point de vue fongicide d'un mélange synergique selon la revendication 1.

**4.** Mélange selon la revendication 1, contenant les principes actifs a et b en un rapport en poids de 1/1 à 2/1.